# EUROPÄISCHE PATENTSCHRIFT

(11) **EP 3 466 748 B1**
(45) Veröffentlichungstag und Bekanntmachung des Hinweises auf die Patenterteilung: **02.12.2020**
(21) Anmeldenummer: 18198777.7
(22) Anmeldetag: 05.10.2018
(51) Int. Cl.: B60L 53/14, B60L 53/53, B60L 53/30, B60L 53/10, H02J 7/00, H02J 7/34, H02J 7/02

(54) **UMRICHTERKONSTELLATION FÜR EINE STROMTANKSTELLE UND ENTSPRECHENDE STROMTANKSTELLE**
ARCHITECTURE OF CONVERTERS FOR AN ELECTRIC CHARGING STATION AND CORRESPONDING ELECTRIC CHARGING STATION
ARCHITECTURE DE CONVERTISSEURS POUR UNE STATION DE RECHARGE ELECTRIQUE ET STATION DE RECHARGE ELECTRIQUE CORRESPONDANTE

(30) Priorität: 06.10.2017 DE 102017217753
(43) Veröffentlichungstag der Anmeldung: 10.04.2019
(73) Patentinhaber: Dr. Ing. h.c. F. Porsche AG, 70435 Stuttgart (DE); ads-tec GmbH, 72622 Nürtingen (DE)
(72) Erfinder: HEYNE, Dr. Raoul, 75446 Wiernsheim (DE); JOSLOWSKI, Florian, 70771 Leinfelden-Echterdingen (DE); KIEFER, Michael, 70563 Stuttgart (DE); SPEIDEL, Thomas, 71706 Markgröningen (DE); NATOUR, Ali, 73269 Hochdorf (DE)
(74) Vertreter: Sturm, Christoph

(56) Entgegenhaltungen:
- EP-A1- 2 875 985
- WO-A2-2014/009369
- US-A1- 2012 181 990
- US-A1- 2012 326 516

## Beschreibung

Die vorliegende Erfindung betrifft eine Stromtankstelle.

### Stand der Technik

Als Ladestation wird in der Elektrotechnik jedwede stationäre Vorrichtung oder elektrische Anlage bezeichnet, welche dazu dient, mobilen akkubetriebenen Geräten, Maschinen oder Kraftfahrzeugen durch einfaches Einstellen oder Einstecken Energie zuzuführen, ohne den Energiespeicher - etwa die Traktionsbatterie eines Elektroautos - zwangsläufig entnehmen zu müssen. Ladestationen für Elektroautos werden mitunter auch als "Stromtankstellen" bezeichnet und können mehrere Ladepunkte umfassen.

Bekannt sind hier insbesondere Gleichstrom-Schnellladesysteme (*high performance charging,* HPC) wie das in Europa verbreitete sogenannte kombinierte Ladesystem (*combined charging system,* CCS). Beim gattungsmäßigen Gleichstromladen wird Gleichstrom aus der Ladesäule direkt in das Fahrzeug eingespeist und hierzu durch einen leistungsstarken Gleichrichter vom Stromnetz oder durch große Pufferakkumulatoren an z.B. Solartankstellen bereitgestellt. Im Fahrzeug befindet sich ein Batteriemanagementsystem, das mit der Ladesäule direkt oder indirekt kommuniziert, um die Stromstärke anzupassen oder bei Erreichung einer Kapazitätsgrenze den Vorgang zu beenden.

Die Leistungselektronik befindet sich hierbei üblicherweise in der Ladesäule. Da die Gleichstromanschlüsse der Ladesäule direkt mit entsprechenden Anschlüssen der Traktionsbatterie verbunden werden, lassen sich verlustarm hohe Ladeströme übertragen, was kurze Ladezeiten ermöglicht.

In den verschiedenen Ladestationen, die weltweit im Einsatz sind, werden die verschiedensten Topologien für die Leistungselektronik verwendet. Bekannt sind insbesondere Ladestationen, die einen Energiespeicher in Form einer Batterie zusätzlich verwenden. Aber auch für die Anbindung einer Batterie in der Leistungselektronik sind mehrere Topologien möglich.

So offenbaren etwa US 2015202973 A und WO 15103164 A Umrichter-Strukturen für eine Ladestation für Elektrofahrzeuge, die es erlauben, zusätzliche Energiespeicherbatterien in der jeweiligen Ladestation zu installieren. Die Anordnung besteht jeweils aus einem an das Netz angeschlossenen Gleichrichter, gefolgt von einem Gleichspannungswandler oder Gleichstromsteller. Die jeweilige Batterie ist einerseits mit dem Stromnetz und andererseits mit der Ladestation verbunden.

JP 2012019602 B, US 2015328999 A und US 2012074901 A beschreiben weitere Schnellladesäulen zum Aufladen von Elektrofahrzeugen mit zusätzlichen Energiespeicherbatterien.

US 2015061569 A sowie US 2008067974 A schließlich erörtern jeweils eine Fahrzeugladestation mit zusätzlichem Energiespeicher und über einen Umrichter verbundenem Netzanschluss.

Die US 2012181990 A1, WO 2014009369 A2, EP 1875985 A1 und die US 2012326516 A1 offenbaren weiteren Stand der Technik.

### Offenbarung der Erfindung

Die Erfindung stellt eine Stromtankstelle nach Patentanspruch 1.

Eine bevorzugte Ausführungsform der Erfindung beruht auf einer Netzanbindung mit 55 kW über einen kleinen AC/DC-Gleichrichter. Anschließend folgt ein kleiner DC/DC-Gleichrichter. Schließlich folgt ein DC/DC-Steller für die Batterie, um die Energie vom Netz in die Speicherbatterie zu laden oder um die Batterie zu entladen und große Leistung zum Laden des Fahrzeuges zur Verfügung zu stellen. Weiter ist noch ein DC/DC-Steller zum Fahrzeug vorgesehen, der die Leistung vom Netz und der Batterie bündelt und dem Fahrzeug die gewünschte Ladespannung von 200 bis 950 V zur Verfügung stellt.

Der vorgeschlagene Ansatz fußt auf der Erkenntnis, dass es verschiedene Wege gibt, eine Umrichter-Topologie in einer Ladestation aufzubauen. So kann eine enthaltene Batterie auf verschiedenste Weisen integriert werden. Ebenso können Umrichter in unterschiedlichster Anzahl verwendet werden. Die denkbaren Lösungen unterscheiden sich hierbei deutlich in ihrer Effizienz.

Die Erfindung trägt ferner dem Umstand Rechnung, dass die meisten bekannten Ladelösungen Ladesäulen anbieten, die die benötigte Ladeenergie direkt aus dem Netz beziehen und somit keinen zusätzlichen Speicher aufweisen. Ein zusätzlicher Speicher kann bei diesen Ladesäulen sehr einfach hinzugefügt werden, indem er AC-seitig mit dem Netz und der Ladesäule verbunden wird. Dies ist nicht unbedingt die effizienteste Lösung. Zusätzliche Speicher sind zudem häufig nicht im gleichen Gehäuse wie die Ladesäule oder der Leistungselektronik untergebracht, was mehr Aufstellungsaufwand bedingt. Häufig haben die Ladesäulen ferner eine bestimmte Mindestgröße, weil Topologien mit veralteten IGBT-Technologien verwendet werden. Diese sind günstig, benötigen jedoch mehr Bauraum.

Ein Vorzug der hier offenbarten Erfindung liegt demgegenüber in der eröffneten Möglichkeit, den Energiespeicher - hier eine Batterie - im selben Gehäuse wie die Leistungselektronik zu verbauen, um den Installationsaufwand zu minimieren. Die Gesamtlösung ist zudem sehr kompakt, um die Sicht im Straßenverkehr nicht nennenswert zu behindern. Dies erfordert den Einsatz von sehr schnellen Umrichter-Topologien mit hohen Schaltfrequenzen, was wiederum den Einsatz von SiC-MOS-Modulen bedingt. Die Batterie ist hierbei im DC-Teil untergebracht, was die Effizienz der Ladestation verbessert und ihre Herstellungskosten deutlich senkt.

Weitere vorteilhafte Ausgestaltungen der Erfindung sind in den abhängigen Patentansprüchen angegeben.

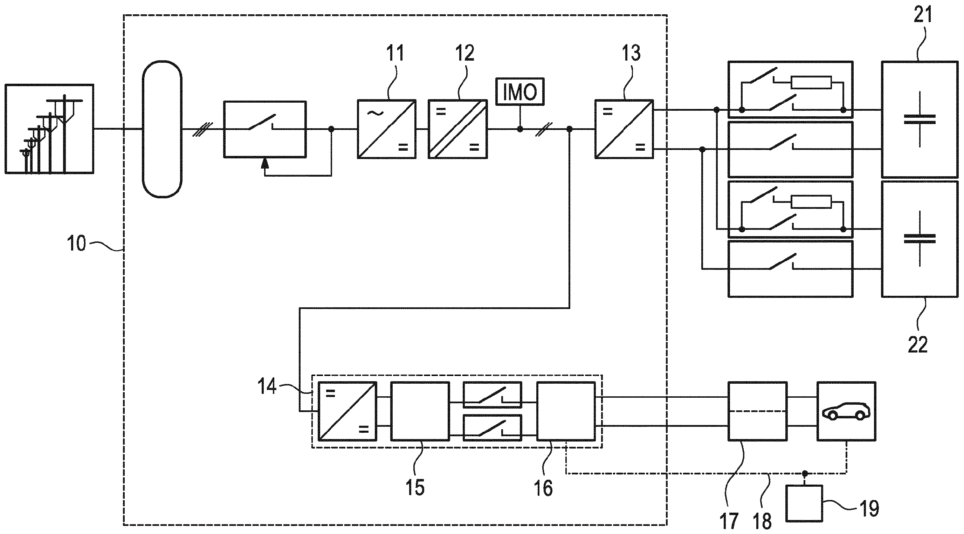

### Kurze Beschreibung der Zeichnung

Ein Ausführungsbeispiel der Erfindung ist in der Zeichnung dargestellt und wird im Folgenden näher beschrieben.

Die einzige Figur zeigt eine erfindungsgemäße Umrichter-Konstellation.

### Ausführungsformen der Erfindung

Die Abbildung illustriert exemplarisch eine mit einer erfindungsgemäßen Ladestation (10) ausgestattete Stromtankstelle. Ein Gleichrichter (*AC*/*DC converter* 11) dient hierbei zum Anschluss an das öffentliche TN- oder TT-Niederspannungsnetz. Ein mit besagtem Gleichrichter (11) verbundener, erster Gleichspannungswandler (*DC*/*DC converter* 12) überführt die Spannung zum Schutz vor Erdschlussfehlern in das interne IT-Netz der Ladestation (10).

An dieser Stelle trennen sich innerhalb der Ladestation (10) im Wesentlichen zwei Leistungspfade: Ein erster Gleichstromsteller (13) speist die angeschlossene, abbildungsgemäß zwei Stränge (21, 22) umfassende Batterie (21, 22) und erlaubt die Rückspeisung der solchermaßen gespeicherten Energie zum beschleunigten Laden angeschlossener Fahrzeuge. Für deren Versorgung sind ein zweiter Gleichstromsteller (14) mit beispielsweise nachgeschaltetem DC-EMV-Filter (15) und beispielsweise ein - vorzugsweise im Lückbetrieb (*discontinuous current mode, discontinuous conduction mode,* DCM) betriebener - zweiter Gleichspannungswandler (16) vorgesehen, die über geeignet geschützte Anschlussleitungen zur Leistungsübertragung verfügen. Je nach Ladestandard und -spannung kann die zugehörige Pilotleitung (18) mit einem Überspannungsschutz (19) versehen sein.

Jeder Strang (21, 22) der Batterie umfasst jeweils mehrere Batteriemodule und jedes Batteriemodul des jeweiligen Strangs (21, 22) umfasst mehrere Batteriezellen. In jedem Batteriemodul sind die Batteriezellen des jeweiligen Batteriemoduls in Reihe geschaltet. In jedem Strang (21, 22) sind die Batteriemodule des jeweiligen Strangs (21, 22) in Reihe geschaltet. Die Stränge (21, 22) der Batterie können parallel geschaltet sein oder unabhängig betrieben werden. Wirken beide Stränge (21, 22) mit einer gemeinsamen Leistungselektronik oder zusammengeschalteten Leistungselektroniken zusammen, so sind die Stränge (21, 22) der Batterie parallel geschaltet. Wirkt jeder der Stränge (21, 22) mit einer individuellen Leistungselektronik zusammen, so sind die Stränge (21, 22) der Batterie nicht parallel geschaltet sondern werden unabhängig betrieben.

## Patentansprüche

1. Stromtankstelle,
mit einer Ladestation (10),
- wobei die Ladestation (10) einen Gleichrichter (11) zum Anschließen der Ladestation (10) an ein öffentliches Niederspannungsnetz aufweist,
- wobei die Ladestation (10) einen mit dem Gleichrichter (11) verbundenen, ersten Gleichspannungswandler (12) aufweist,
- wobei die Ladestation (10) einen mit dem ersten Gleichspannungswandler (12) verbundenen ersten Gleichstromsteller (13) eines ersten Leistungspfads zum Anschließen einer Batterie (21, 22) an die Ladestation (10) und für die Rückspeisung gespeicherter Energie zum beschleunigten Laden eines Elektroautos aufweist,
- wobei die Ladestation (10) einen mit dem ersten Gleichspannungswandler (12) verbundenen zweiten Gleichstromsteller (14) eines zweiten Leistungspfads zum Anschließen des Elektroautos an die Ladestation (10), zum Bündeln der Leistung vom öffentlichen Niederspannungsnetz und der Batterie (21, 22) und zur Verfügungsstellung einer gewünschten Ladespannung von 200 V bis 950 V für das Elektrofahrzeug aufweist,
wobei der erste Gleichspannungswandler (12) zwischen dem Gleichrichter (11) und dem ersten Gleichstromsteller (13) angeordnet ist,
wobei der erste Gleichspannungswandler (12) zwischen dem Gleichrichter (11) und dem zweiten Gleichstromsteller (14) angeordnet ist,
- wobei dem zweiten Gleichstromsteller (14) ein EMV-Filter (15) nachgeschaltet ist,
- wobei dem EMV-Filter (15) ein für einen Lückbetrieb eingerichteter zweiter Gleichspannungswandler (16) nachgeschaltet ist,
mit einem mit dem zweiten Gleichspannungswandler (16) verbundenen Blitzschutz (17) zum Anschließen des Elektroautos.

2. Stromtankstelle nach Anspruch 1,
**gekennzeichnet durch** folgendes Merkmal:
- eine mit dem zweiten Gleichspannungswandler (16) verbundene Pilotleitung (18) zum Anschließen des Elektroautos.

3. Stromtankstelle nach Anspruch 2,
**gekennzeichnet durch** folgendes Merkmal:
- einen mit der Pilotleitung (18) verbundenen Überspannungsschutz (19).

4. Stromtankstelle nach einem der Ansprüche 1 bis 3, **gekennzeichnet durch** folgendes Merkmal:
- eine an den ersten Gleichstromsteller (13) angeschlossene Batterie (21, 22).

5. Stromtankstelle nach Anspruch 4,
**gekennzeichnet durch** folgendes Merkmal:
- die Batterie (21, 22) umfasst mehrere Stränge (21, 22) .

## Claims

1. Electricity charging point,
having a charging station (10),
- wherein the charging station (10) has a rectifier (11) for connecting the charging station (10) to a public low-voltage grid,
- wherein the charging station (10) has a first DC-to-DC voltage converter (12) connected to the rectifier (11),
- wherein the charging station (10) has a first DC chopper (13), connected to the first DC-to-DC voltage converter (12), of a first power path for connecting a battery (21, 22) to the charging station (10) and for feeding back stored energy for faster charging of an electric car,
- wherein the charging station (10) has a second DC chopper (14), connected to the first DC-to-DC voltage converter (12), of a second power path for connecting the electric car to the charging station (10), for pooling the power from the public low-voltage grid and the battery (21, 22) and for making available a desired charging voltage of 200 V to 950 V for the electric vehicle,
wherein the first DC-to-DC voltage converter (12) is arranged between the rectifier (11) and the first DC chopper (13),
wherein the first DC-to-DC voltage converter (12) is arranged between the rectifier (11) and the second DC chopper (14),
- wherein an EMC filter (15) is connected downstream of the second DC chopper (14),
- wherein a second DC-to-DC voltage converter (16) configured for discontinuous conduction mode is connected downstream of the EMC filter (15),
having a lightning protector (17), connected to the second DC-to-DC voltage converter (16), for connection to the electric car.

2. Electricity charging point according to Claim 1,
**characterized by** the following feature:
- a pilot line (18), connected to the second DC-to-DC voltage converter (16), for connection to the electric car.

3. Electricity charging point according to Claim 2,
**characterized by** the following feature:
- a surge protector (19) connected to the pilot line (18) .

4. Electricity charging point according to one of Claims 1 to 3,
**characterized by** the following feature:
- a battery (21, 22) connected to the first DC chopper (13) .

5. Electricity charging point according to Claim 4,
**characterized by** the following feature:
the battery (21, 22) comprises a plurality of strings (21, 22).

## Revendications

1. Station de recharge électrique,
comprenant une station de charge (10),
- dans laquelle la station de charge (10) comprend un redresseur (11) destiné à raccorder la station de charge (10) à un réseau public basse tension,
- dans laquelle la station de charge (10) comporte un premier convertisseur de tension continue (12) relié au redresseur (11),
- dans laquelle la station de charge (10) comprend un premier hacheur de courant continu (13) d'un premier trajet de puissance, relié au premier convertisseur de courant continu (12), pour raccorder une batterie (21, 22) à la station de charge (10) et pour renvoyer l'énergie accumulée afin de charger de manière accélérée une voiture électrique,
- dans laquelle la station de charge (10) comprend un second convertisseur de tension continue (14), relié au premier convertisseur de tension continue (12), d'un second trajet de puissance, pour raccorder la voiture électrique à la station de charge (10), pour combiner la puissance provenant du réseau public basse tension et de la batterie (21, 22) et pour fournir une tension de charge souhaitée de 200 V à 950 V pour le véhicule électrique, dans laquelle le premier convertisseur de tension continue (12) est disposé entre le redresseur (11) et le premier hacheur de courant continu (13),
dans laquelle le premier convertisseur de tension continue (12) est disposé entre le redresseur (11) et le second convertisseur de tension continue (14),
- dans laquelle un filtre EMV (15) est connecté en aval du second hacheur de courant continu (14),
- dans laquelle un second convertisseur de tension continue (16), qui est conçu pour un fonctionnement intermittent, est connecté en aval du filtre EMV (15), comprenant un parafoudre (17), relié au second convertisseur de tension continue (16), pour le raccordement de la voiture électrique.

2. Station de recharge électrique selon la revendication 1, **caractérisée par** la caractéristique suivante :
- une ligne pilote (18) reliée au second convertisseur de tension continue (16) pour le raccordement de la voiture électrique.

3. Station de recharge électrique selon la revendication 2, **caractérisée par** la caractéristique suivante :
- une protection contre les surtensions (19) reliée à la ligne pilote (18).

4. Station de recharge selon l'une des revendications 1 à 3, **caractérisée par** la caractéristique suivante :
- une batterie (21, 22) raccordée au premier hacheur de courant continu (13).

5. Station de recharge selon la revendication 4, **caractérisée par** la caractéristique suivante :
- la batterie (21, 22) comprend plusieurs branches (21, 22) .
